# NEUE EUROPÄISCHE PATENTSCHRIFT

(11) **EP 1 046 329 B2**
(45) Veröffentlichungstag und Bekanntmachung des Hinweises auf die Entscheidung über den Einspruch: **27.09.2017**
(45) Hinweis auf die Patenterteilung: 16.12.2009
(21) Anmeldenummer: 00107826.0
(22) Anmeldetag: 12.04.2000
(51) Int. Cl.: A01B 73/00, A01D 41/14

(54) **Fahrzeug für den Einsatz in der Landwirtschaft, insbesondere einen Feldhäcksler oder Mähdrescher, mit einem daran angebauten Zusatzgerät**
Agricultural vehicle, paricularly a forage harvester or combine harvester, with an additional implement attached thereon
Vehicule agricole,en particulier une ramasseuse-hacheuse ou moissonneuse-batteuse, avec un outil additionel porté par le vehicule

(30) Priorität: 23.04.1999 DE 19918551
(43) Veröffentlichungstag der Anmeldung: 25.10.2000
(73) Patentinhaber: Deere & Company, Moline, IL 61265 (US); Maschinenfabrik Kemper GmbH & Co. KG, 48703 Stadtlohn (DE)
(72) Erfinder: Holtkotte, Eberhard, 66482 Zweibrücken (DE); Schäfer, Rainer, 66482 Zweibrücken (DE); Vogelgesang, Claus J., 66399 Mandelbachtal (DE); Wübbels, Richard, 46414 Rhede (DE)
(74) Vertreter: Holst, Sönke

(56) Entgegenhaltungen:
- EP-A2- 0 215 349
- EP-B1- 0 789 990
- DE-A- 19 726 917
- DE-A1- 1 457 948
- DE-U- 8 517 625
- DE-U- 29 817 666
- RU-C1- 2 021 670
- SU-A1- 1 440 407
- US-A- 2 509 824
- US-A- 3 683 605
- US-A- 3 822 534
- US-A- 4 184 314
- US-A- 4 360 215
- US-A- 4 463 546

## Beschreibung

Die Erfindung betrifft ein Verfahren zum Betreiben eines Fahrzeugs in Form eines Feldhäckslers oder Mähdreschers beim Straßentransport und Erntebetrieb nach dem Oberbegriff des Anspruchs 1 und eine Kombination aus einem Fahrzeug, einem Zusatzgerät und einem zusätzlichen Rad.

In der EP 0 386 430 A ist ein Aufnehmer für Erntemaschinen - eine sogenannte Pick-up mit einer Aufsammeltrommel - offenbart, der durch eine Tastvorrichtung mit an einer Pendelachse aufgehängten Rädern abgestützt wird. In der US 4 463 546 ist ein ähnlicher, mit Stützrädern versehener Aufnehmer wiedergegeben, der an einen Mähdrescher montiert wird und zum Aufsammeln bereits abgeschnittenen, auf dem Boden liegenden Getreides dient. In der DE 197 26 917 A ist ein Feldhäcksler mit einer ebenfalls an Rädern abgestützten Pick-up wiedergegeben.

Die US 5 005 342 A beschreibt einen Feldhäcksler mit einem diesem vorgelagerten Schwadaufnehmer, der mit einem Konditionierer für das aufgenommene Erntegut ausgestattet ist. Das konditionierte Erntegut wird durch einen Einzugskanal in den Feldhäcksler gefördert. Der Schwadaufnehmer ist mit Rädern versehen, die zur Höheneinstellung dienen und bei der Feldarbeit einen Teil des Gewichts des Schwadaufnehmers abstützen.

Die US 4 184 314 A beschreibt ein an einem Traktor angebautes, mit Stützrädern ausgestattetes Gerät zum Abschneiden von Erdnusspflanzen. Die abgeschnittenen Pflanzen bleiben zunächst zum Abtrocknen auf dem Feld liegen und werden später mit einem Mähdrescher gedroschen.

In der US 3 822 534 A wird ein frontseitig an einem Traktor angebauter Feldhäcksler mit eigenen Stützrädern beschrieben.

Die US 4 360 215 A beschreibt eine mit Rädern ausgestattete Transporteinrichtung für eine Drillmaschine.

In der DE 85 17 625 U wird ein Ackerbearbeitungsgerät mit einer Walze beschrieben, die an einem mit Rädern ausgestatteten Fahrgestell befestigt ist.

Die DE 1 457 948 A beschreibt einen Mähdrescher, an dem im Bereich des Schneidwerks oder des Schrägförderers oder am vorderen Mähdrescherrahmenbereich Stützräder montiert sind, die beim Erntevorgang den Bodendruck vermindern sollen. Das eigentliche Schneidwerk ist starr und wird in an sich bekannter Weise auf einem separaten Transportwagen transportiert.

Insbesondere an Feldhäckslern, aber auch an Mähdreschern finden lösbare Erntevorsätze zum Abernten und Einbringen von Erntegut Verwendung, die mechanisch relativ aufwendig und schwer sind. Derartige Erntevorsätze sind insbesondere sogenannte Maispflükker oder Maisgebisse. Derzeit wird aus wirtschaftlichen Gründen eine immer größere wirksame Breite der Erntevorsätze gewünscht, um ein Feld in kürzerer Zeit und mit weniger Überquerungen abernten zu können. Eine gebräuchliche Breite ist beispielsweise 6 m.

In der DE 298 17 666 U ist ein Fahrzeug eingangs genannter Art beschrieben, bei dem die Seitenteile des Erntevorsatzes zum Straßentransport empor geschwenkt werden. Aufgrund des hohen Gewichts der breiteren Erntevorsätze werden bei bekannten, mit angetriebenen Vorderrädern und lenkbaren Hinterrädern versehenen Feldhäckslern - die eine hohe Leistung und daher ebenfalls ein großes Gewicht aufweisen müssen, um adäquat mit den breiteren Erntevorsätzen zusammenarbeiten zu können - jedoch die gesetzlich maximal zugelassenen Achslastwerte der Vorderachse überschritten. Um derart breite Erntevorsätze mit der bekannten zweiachsigen Konstruktion verwenden zu können, wäre ein komplett neues Aufbaukonzept für einen Feldhäcksler nötig. Ähnliche Probleme können sich auch bei Mähdreschern ergeben.

Die US 3 683 605 A beschreibt einen Mähdrescher mit einem Schneidwerk. Am Rahmen des Schneidwerks sind Räder befestigt, die beim Erntebetrieb hochgeschwenkt werden. Zum Straßentransport werden die Räder heruntergeschwenkt und das Schneidwerk als Anhänger hinter dem Mähdrescher hergezogen.

Das der Erfindung zugrunde liegende Problem wird in den hohen Achslastwerten von zweiachsigen, mit relativ breiten und schweren angebauten Erntevorsätzen ausgestatteten landwirtschaftlichen Fahrzeugen gesehen.

Dieses Problem wird erfindungsgemäß durch die Lehre der Patentansprüche 1 und 2 gelöst, wobei in den weiteren Patentansprüchen Merkmale aufgeführt sind, die die Lösung in vorteilhafter Weise weiterentwikkeln.

Das Zusatzgerät in Form eines Erntevorsatzes ist an dem als Mähdrescher oder Feldhäcksler ausgeführten Fahrzeug angebaut, also am Fahrzeug befestigt und nicht - z.B. durch eine Anhängekupplung - passiv gelenkt (nachlaufend). Es ist jedoch in der Regel relativ zum Fahrzeug in der Höhe und/oder seitlich verstellbar und/oder (pendelnd) schwenkbar und auch vom Fahrzeug lösbar. Das Zusatzgerät ist in Vorwärtsfahrtrichtung vor dem Fahrzeug befestigt. Das Zusatzgerät ist in mehrere Teile aufgeteilt, wobei zwei Seitenteile an beiden Seiten eines Mittelteils schwenkbar befestigt sind. Für den Transport auf einer Straße werden die Seitenteile nach oben verschwenkt; die Verschwenkung erfolgt insbesondere hydraulisch. Bei derartigen Zusatzgeräten erweist sich eine Anbringung des zusätzlichen Rades seitlich am Mittelteil als vorteilhaft. Das zusätzliche Rad wird am Zusatzgerät angebracht.

Das Zusatzgerät wird durch mindestens ein zusätzliches Rad abgestützt, um die Räder des Fahrzeugs zu entlasten. Beim Fahren auf einer Straße ist ein Überschreiten der maximal zulässigen Achslast nicht mehr zu befürchten.

Unter einem Zusatzgerät sind im Rahmen der vorliegenden Erfindung zum Abernten von Erntegut geeignete Einrichtungen zu verstehen, also Einrichtungen, mit denen das Erntegut - oder Teile davon - vom Boden abgetrennt und zur weiteren Verarbeitung in die Erntemaschine transportiert werden. Derartige Einrichtungen sind beispielsweise Mähhäcksler, Pflücker oder Mähvorsätze. Bei Mähhäckslern, die auch unter der Bezeichnung Maisgebiß bekannt sind, werden die Stengel des Ernteguts in aufrechter Stellung eingezogen, gemäht und der Erntemaschine zugeführt. Es wird also das gesamte abgeerntete Gut verarbeitet. Ein derartiger Mähhäcksler ist beispielsweise aus der DE 195 31 918 A bekannt. Pflücker eignen sich hingegen für Erntegüter, zu denen unter anderem Mais, Sonnenblumen, Baumwolle und Bohnen zählen, von denen nur die an einem Stengel angewachsene Frucht geerntet werden soll. Der Pflücker erfaßt den Stengel der Pflanze, zieht ihn an einer Abstreifkante entlang und streift die Frucht dort ab. Mittels Förderketten, Paddeln, Schnecken oder dergleichen werden die Früchte dann der Erntemaschine zur weiteren Verarbeitung zugeführt. Ein derartiger Pflücker ist beispielsweise in der DE 196 01 421 A offenbart worden. Schließlich sind Mähvorsätze ebenfalls bekannt; sie werden insbesondere an Mähdreschern verwendet.

In einer bevorzugten Ausführungsform werden zumindest zwei zusätzliche Räder verwendet, die beidseits des Zusatzgeräts angebracht werden.

Bezüglich der Aufhängung des zusätzlichen Rades am Fahrzeug bzw. am Zusatzgerät bestehen im Rahmen der Erfindung verschiedene Möglichkeiten. Zum einen kann das zusätzliche Rad einzeln aufgehängt sein. Bei Verwendung mehrerer zusätzlicher Räder können sie aber auch mittels einer Achse miteinander verbunden sein.

Außerdem ist das zusätzliche Rad nachlaufend - und somit passiv gelenkt - und vorzugsweise federnd aufgehängt, um das Fahrverhalten des Fahrzeugs mit dem Zusatzgerät zu verbessern.

Das zusätzliche Rad (oder die zusätzlichen Räder) wird (werden) beim Fahren des Fahrzeugs auf einer Straße benötigt, um ein Überschreiten der zusätzlichen Achslast zu vermeiden.

Erfindungsgemäß ist die Verwendung eines Wagens vorgesehen, der unter das Zusatzgerät und/oder unter das Fahrzeug geschoben und dort arretiert werden kann. An dem Wagen ist das zusätzliche Rad (oder die zusätzlichen Räder) montiert. Bevor der Wagen unter das Zusatzgerät geschoben wird, bietet sich an, das Zusatzgerät anzuheben. Nachdem der Wagen arretiert ist, kann das Zusatzgerät abgesenkt werden, so daß der Wagen mit dem Rad (oder den Rädern) es zum Straßentransport abstützt.

In den Zeichnungen ist ein nachfolgend näher beschriebenes Ausführungsbeispiel der Erfindung dargestellt. Es zeigt:

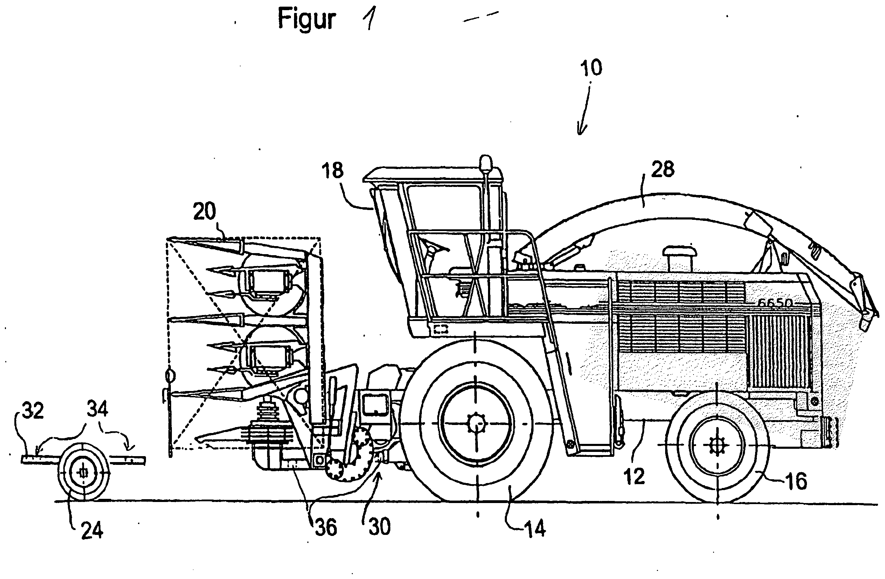

Fig. 1 ein landwirtschaftliches Fahrzeug mit Zusatzgerät in Seitenansicht und in schematischer Darstellung.

Ein in Figur 1 gezeigtes landwirtschaftliches Fahrzeug 10 in der Art eines selbstfahrenden Feldhäckslers baut sich auf einem

Rahmen 12 auf, der von vorderen und rückwärtigen Rädern 14 und 16 getragen wird. Die vorderen Räder 14 dienen als Hauptantriebsräder, während die rückwärtigen Räder 16 lenkbar sind. Die Bedienung des Fahrzeugs 10 erfolgt von einer Fahrerkabine 18 aus, von der aus ein Vorsatz 20 einsehbar ist. Mittels des Vorsatzes 20 vom Boden aufgenommenes Gut, z. B. Mais, Sonnenblumen oder Sorghum, wird über einen Einzugszusammenbau 30 einer nicht eingezeichneten Häckseltrommel im Innern des Fahrzeugs 10 zugeführt, die es in kleine Stücke häckselt und es einer (ebenfalls nicht eingezeichneten) Fördervorrichtung aufgibt. Das Gut verläßt das Fahrzeug 10 zu einem nebenher fahrenden Anhänger über einen drehbaren Austragsschacht 28. Zwischen der Häckseltrommel und der Fördervorrichtung kann eine nicht eingezeichnete Nachzerkleinerungsvorrichtung angeordnet sein. Weitere Einzelheiten des Fahrzeugs 10 bedürfen keiner Beschreibung, weil dieses an sich bekannt ist.

Zum Aufnehmen des Ernteguts dient das Zusatzgerät 20, das in Vorwärtsfahrtrichtung an der Frontseite des Fahrzeugs 10 befestigt ist. Das Zusatzgerät 20 der dargestellten Ausführungsform ist ein an sich bekannter Mähhäcksler, der aus einem Mittelteil und zwei (bezüglich der Fahrtrichtung der Erntemaschine 10) seitlich links und rechts neben dem Mittelteil angeordneten Seitenteilen besteht. Die Seitenteile sind - insbesondere zum Straßentransport - nach oben schwenkbar am Mittelteil befestigt, und können zum Ernteeinsatz insbesondere hydraulisch heruntergeschwenkt werden, so daß sie beim Erntebetrieb parallel zum Mittelteil verlaufen. Anschließend können sie wieder hinauf geschwenkt werden. Die Zeichnung zeigt die Seitenteile in hochgeschwenktem Zustand. Am Mittelstück sind in der vorliegenden Ausführungsform vier Einzugs- und Mähtrommeln angebracht, während an beiden Seitenteilen jeweils zwei Einzugs- und Mähtrommeln angebracht sind. Das Zusatzgerät 20 ist in an sich bekannter Weise mit Halmteilern, Einzugs- und Mähtrommeln, Teilerspitzen, Abdeckplatten und einer Transporteinrichtung ausgestattet, die Teile geernteten Gutes der Häckseltrommel dem Fahrzeug 10 zuführt. Das als Mähhäcksler ausgeführte Zusatzgerät 20 zieht die Stengel des Mähguts in aufrechter Stellung ein, mäht sie und führt sie dem Einzugszusammenbau 30 und anschließend der Häckseltrommel des Fahrzeugs 10 zu.

Die Figur 1 zeigt eine Ausführungsform der Erfindung. An einem Wagen 32 mit einem flachen Traggestell sind seitlich zwei zusätzliche Räder 24 befestigt. Das Traggestell ist mit mehreren vertikal verlaufenden Löchern versehen. Soll das Fahrzeug 10 mit dem Zusatzgerät 20 auf einer Straße transportiert werden, wird das Zusatzgerät 20 zunächst angehoben, und der Wagen 32 unter das Zusatzgerät 20 geschoben. Das Zusatzgerät 20 ist mit Löchern 36 versehen, die zu den Löchern 34 des Wagens 32 komplementär sind. Durch die Löcher 34 und 36 können somit Bolzen oder dergleichen gesteckt werden, sobald der Wagen 32 in seine korrekte Position verbracht wurde. Die Bolzen fixieren dann den Wagen 32 am Zusatzgerät 20, und das Zusatzgerät 20 kann wieder abgesenkt werden, so daß die zusätzlichen Räder 24 des Wagens 32 das Zusatzgerät 20 abstützen und die Belastung der vorderen Räder 14 vermindern. Zum Betrieb auf einem Feld wird der Wagen 32 in umgekehrter Reihenfolge demontiert.

## Patentansprüche

1. Verfahren zum Betreiben eines Fahrzeugs (10) für den Einsatz in der Landwirtschaft in Form eines Feldhäckslers oder Mähdreschers beim Straßentransport und Erntebetrieb,
wobei das Fahrzeug (10) durch vordere Räder (14), die als Hauptantriebsräder dienen und rückwärtige, lenkbare Räder (16) in einer Vorwärtsrichtung bewegbar ist und an dem Fahrzeug (10) in Vorwärtsfahrtrichtung vor dem Fahrzeug (10) ein Einzugszusammenbau (30) vorhanden ist, an dem ein Zusatzgerät (20) in Form eines Erntevorsatzes befestigt ist, das betreibbar ist, im Erntebetrieb vom Boden aufgenommenes Gut aufzunehmen und in den Einzugszusammenbau einzuführen,
das Zusatzgerät (20) aus einem Mittelteil und schwenkbar daran befestigten Seitenteilen aufgebaut ist, welche zum Straßentransport nach oben schwenkbar am Mittelteil befestigt sind,
die Seitenteile vor dem Straßentransport des Fahrzeugs (10) gegenüber dem Mittelteil nach oben geschwenkt werden und das Zusatzgerät (20) während des Straßentransports des Fahrzeugs (10) am Einzugszusammenbau (30) befestigt ist,
**dadurch gekennzeichnet, dass** beim Straßentransport des Fahrzeugs (10) wenigstens ein zusätzliches Rad (22, 24) zur Abstützung des Zusatzgerätes (20) in Bodenkontakt gebracht wird,
dass das zusätzliche Rad (22,24) am Zusatzgerät (20) angebracht ist und nachlaufend aufgehängt an einem Wagen (32) mit einem flachen Traggestell montiert ist,
der unter das Zusatzgerät (20) geschoben und dort verrastet wird,
und dass der Wagen (32) mit dem zusätzlichen Rad (22, 24) beim Erntebetrieb abgenommen wird.

2. Kombination aus einem Fahrzeug (10) für den Einsatz in der Landwirtschaft, einem Zusatzgerät (22, 24) und wenigstens einem zusätzlichen Rad (22, 24), wobei:
das Fahrzeug (10) in Form eines Feldhäckslers oder Mähdreschers ausgebildet ist und durch vordere Räder (14), die als Hauptantriebsräder dienen und rückwärtige, lenkbare Räder (16) in einer Vorwärtsrichtung bewegbar ist und an dem Fahrzeug (10) in Vorwärtsfahrtrichtung vordem Fahrzeug (10) ein Einzugszusammenbau (30) vorhanden ist, an dem ein Zusatzgerät (20) in Form eines Erntevorsatzes befestigt ist, das betreibbar ist, im Erntebetrieb vom Boden aufgenommenes Gut aufzunehmen und in den Einzugszusammenbau einzuführen,
das Zusatzgerät (20) aus einem Mittelteil und schwenkbar daran befestigten Seitenteilen aufgebaut ist, welche zum Straßentransport nach oben schwenkbar am Mittelteil befestigt sind,
die Seitenteile vor dem Straßentransport des Fahrzeugs (10) gegenüber dem Mittelteil nach oben schwenkbar sind und das Zusatzgerät (20) während des Straßentransports des Fahrzeugs (10) am Einzugszusammenbau (30) befestigt ist,
**dadurch gekennzeichnet, daß** beim Straßentransport des Fahrzeugs (10) das wenigstens eine zusätzliche Rad (22, 24) zur Abstützung des Zusatzgerätes (20) in Bodenkontakt bringbar ist.

3. Kombination nach Anspruch 2, **dadurch gekennzeichnet, daß** das Zusatzgerät (20) ein Mähhäcksler, Pflücker oder Mähvorsatz ist.

4. Kombination nach Anspruch 2 oder 3, **gekennzeichnet durch** wenigstens zwei zusätzliche Räder (22,24), von denen jeweils eines auf einer Seite des Zusatzgeräts (20) bzw. des Fahrzeugs (10) angeordnet ist.

5. Kombination nach einem der Ansprüche 2 bis 4, **dadurch gekennzeichnet, daß** das zusätzliche Rad (24) am seitlichen Rand des Mitteltells befestigt ist.

6. Kombination nach einem der Ansprüche 2 bis 5, **dadurch gekennzeichnet, daß** das zusätzliche Rad (22,24) separat aufgehängt ist.

7. Kombination nach einem der Ansprüche 4 bis 7, **dadurch gekennzeichnet, daß** die zusätzlichen Räder (22,24) an einer gemeinsamen Achse befestigt sind.

8. Kombination nach einem der Ansprüche 2 bis 7, **dadurch gekennzeichnet, daß** das zusätzliche Rad (22,24) federnd aufgehängt ist.

9. Kombination nach einem der Ansprüche 2 bis 8, **dadurch gekennzeichnet, daß** das zusätzliche Rad (22,24) lösbar befestigt ist.

10. Kombination nach einem der Ansprüche 2 bis 9, **dadurch gekennzeichnet, daß** das das zusätzliche Rad (22,24) insbesondere hydraulisch von einer Betriebsstellung, in der es in Bodenkontakt ist, in eine Außerbetriebsstellung verbringbar ist.

## Claims

1. A method for operating an agricultural vehicle (10) in the form of a forage harvester or combine harvester during road transportation and in harvesting mode,
wherein the vehicle (10) is movable in a forwards direction by means of front wheels (14), which serve as main driving wheels, and rear, steerable wheels (16), and on the vehicle (10), in front of the vehicle (10) in the forwards direction of travel, there is a gathering assembly (30) to which an additional implement (20) in the form of a harvesting attachment is fastened, said additional implement being operable so as to pick up crop picked up from the ground during the harvesting mode and to introduce said crop into the gathering assembly,
the additional implement (20) is constructed from a central part and side parts which are fastened pivotably thereto and are fastened to the central part in a manner such that they can be pivoted upwards for road transportation,
the side parts are pivoted upwards in relation to the central part prior to the road transportation of the vehicle (10), and the additional implement (20) is fastened to the gathering assembly (30) during the road transportation of the vehicle (10),
**characterized in that**, during the road transportation of the vehicle (10), at least one additional wheel (22, 24) is brought into contact with the ground in order to support the additional implement (20),
that the additional wheel (22, 24) is attached to the additional implement (20) and suspended in a trailing manner on a carriage (32) which is pushed under the additional implement (20) and arrested there,
and that the carriage (32) with the additional wheel (22, 24) is removed during harvest operation.

2. A combination of an agricultural vehicle (10) for agricultural use, an additional implement (20) and at least one additional wheel (22, 24), wherein:
the vehicle (10) is arranged in the form of a forage harvester or combine harvester and movable in a forwards direction by means of front wheels (14), which serve as main driving wheels, and rear, steerable wheels (16), and on the vehicle (10), in front of the vehicle (10) in the forwards direction of travel, there is a gathering assembly (30) to which an additional implement (20) in the form of a harvesting attachment is fastened, said additional implement being operable so as to pick up crop picked up from the ground during the harvesting mode and to introduce said crop into the gathering assembly,
the additional implement (20) is constructed from a central part and side parts which are fastened pivotably thereto and are fastened to the central part in a manner such that they can be pivoted upwards for road transportation,
the side parts can be pivoted upwards in relation to the central part prior to the road transportation of the vehicle (10), and the additional implement (20) is fastened to the gathering assembly (30) during the road transportation of the vehicle (10),
**characterized in that**, during the road transportation of the vehicle (10), the at least one additional wheel (22, 24) can be brought into contact with the ground in order to support the additional implement (20),
that the additional wheel (22, 24) can be attached to the additional implement (20) and is suspended in a trailing manner on a carriage (32) which is pushed under the additional implement (20) and arrested there,
and that the carriage (32) with the additional wheel (22, 24) can be removed during harvest operation.

3. Combination according to Claim 2, **characterized in that** the additional implement (20) is a crop chopper, picker or cutting attachment.

4. Combination according to Claim 2 or 3, **characterized by** at least two additional wheels (22, 24), of which one is arranged on each side of the additional implement (20) or of the vehicle (10).

5. Combination according to one of Claims 2 to 4, **characterized in that** the additional wheel (24) is fastened to the lateral edge of the central part.

6. Combination according to one of Claims 2 to 5, **characterized in that** the additional wheel (22, 24) is suspended separately.

7. Combination according to one of Claims 4 to 6, **characterized in that** the additional wheels (22, 24) are fastened to a common axle.

8. Combination according to one of Claims 2 to 7, **characterized in that** the additional wheel (22, 24) is suspended resiliently.

9. Combination according to one of Claims 2 to 8, **characterized in that** the additional wheel (22, 24) is fastened releasably.

10. Combination according to one of Claims 2 to 9, **characterized in that** the additional wheel (22, 24) can be brought, in particular hydraulically, from an operating position in which it is in contact with the ground into a position in which it is not in operation.

## Revendications

1. Procédé pour utiliser un véhicule (10) pour l'utilisation en agriculture sous forme d'une ramasseuse-hacheuse ou d'une moissonneuse-batteuse lors du transport sur route et du mode de récolte,
dans lequel le véhicule (10) peut être déplacé dans une direction avant par des roues avant (14), qui servent de roues motrices principales et par des roues arrière dirigeables (16), et un assemblage d'amenée (30) est prévu sur le véhicule (10) avant le véhicule (10) dans la direction de marche avant, sur lequel est fixé un outil additionnel (20) en forme d'auxiliaire de récolte, qui peut fonctionner pour recevoir des produits prélevés du sol en mode de récolte et pour les introduire dans l'assemblage d'amenée,
l'outil additionnel (20) se composant d'une partie centrale et de parties latérales fixées à celle-ci de manière pivotante, qui sont fixées à la partie centrale pour le transport sur route de manière à pouvoir pivoter vers le haut,
les parties latérales étant pivotées vers le haut par rapport à la partie centrale avant le transport sur route du véhicule (10) et l'outil additionnel (20) étant fixé à l'assemblage d'amenée (30) pendant le transport sur route du véhicule (10),
**caractérisé en ce que** lors du transport sur route du véhicule (10), au moins une roue supplémentaire (22, 24) est amenée en contact avec le sol pour supporter l'outil additionnel (20),
**en ce que** la roue supplémentaire (22, 24) est montée sur l'outil additionnel (20) et montée de manière suiveuse à un chariot (32) qui peut être poussé sous l'outil additionnel (20) et y être encliqueté,
et **en ce que** le chariot (32) avec la roue supplémentaire (22, 24) est démonté pendant la mode de récolte.

2. Combinaison d'un véhicule (10) pour l'utilisation en agriculture, d'un outil additionnel (20) et d'au moins une roue supplémentaire (22, 24), dans laquelle
le véhicule (10) est arrangé sous forme d'une ramasseuse-hacheuse ou d'une moissonneuse-batteuse et peut être déplacé dans une direction avant par des roues avant (14) qui servent de roues motrices principales et par des roues arrière dirigeables (16) et un assemblage d'amenée (30) est prévu sur le véhicule (10) avant le véhicule (10) dans la direction de marche avant, sur lequel est fixé un outil additionnel (20) en forme d'auxiliaire de récolte, qui peut fonctionner pour recevoir des produits prélevés du sol en mode de récolte et pour les introduire dans l'assemblage d'amenée,
l'outil additionnel (20) se composant d'une partie centrale et de parties latérales fixées à celle-ci de manière pivotante, qui sont fixées à la partie centrale pour le transport sur route de manière à pouvoir pivoter vers le haut,
les parties latérales étant pivotées vers le haut par rapport à la partie centrale avant le transport sur route du véhicule (10) et l'outil additionnel (20) étant fixé à l'assemblage d'amenée (30) pendant le transport sur route du véhicule (10),
**caractérisée en ce que** lors du transport sur route du véhicule (10), l'au moins une roue supplémentaire (22, 24) peut être amenée en contact avec le sol pour supporter l'outil additionnel (20),
**en ce que** la roue supplémentaire (22, 24) peut être montée à l'outil additionnel (20) et est montée de manière suiveuse sur un chariot (32) qui peut être poussé sous l'outil additionnel (20) et y être encliqueté,
et **en ce que** le chariot (32) avec la roue supplémentaire (22, 24) peut être démonté pendant la mode de récolte.

3. Combinaison selon la revendication 2, **caractérisée en ce que** l'outil additionnel (20) est une faucheuse-hacheuse, une cueilleuse ou un dispositif de récolte.

4. Combinaison selon la revendication 2 ou 3, **caractérisée par** au moins deux roues supplémentaires (22, 24) dont à chaque fois l'une est disposée d'un côté de l'outil additionnel (20) ou du véhicule (10).

5. Combinaison selon l'une quelconque des revendications 2 à 4, **caractérisée en ce que** la roue supplémentaire (24) est fixée sur le bord latéral de la partie centrale.

6. Combinaison selon l'une quelconque des revendications 2 à 5, **caractérisée en ce que** la roue supplémentaire (22, 24) est accrochée séparément.

7. Combinaison selon l'une quelconque des revendications 4 à 6, **caractérisée en ce que** les roues supplémentaires (22, 24) sont fixées à un axe commun.

8. Combinaison selon l'une quelconque des revendications 2 à 7, **caractérisée en ce que** la roue supplémentaire (22, 24) est accrochée avec une suspension à ressort.

9. Combinaison selon l'une quelconque des revendications 2 à 8, **caractérisée en ce que** la roue supplémentaire (22, 24) est fixée de manière amovible.

10. Combinaison selon l'une quelconque des revendications 2 à 9, **caractérisée en ce que** la roue supplémentaire (22, 24) peut être amenée dans une position hors fonctionnement en particulier de manière hydraulique depuis une position de fonctionnement dans laquelle elle est en contact avec le sol.
